# EUROPEAN PATENT APPLICATION

(11) **EP 4 366 329 A1**
(43) Date of publication of application: **08.05.2024**
(21) Application number: 21948305.4
(22) Date of filing: 29.06.2021
(51) Int. Cl.: H04W 4/02, H04W 48/04

(54) **NETWORK NODE AND COMMUNICATION METHOD**

(71) Applicant: NTT DOCOMO, INC., Tokyo 100-6150 (JP)
(72) Inventor: MINOKUCHI, Atsushi, Tokyo 100-6150 (JP); HIKOSAKA, Maoki, Tokyo 100-6150 (JP)
(74) Representative: Hoffmann Eitle
(86) International application number: PCT/JP2021/024568
(87) International publication number: WO 2023/275997

(57) **Abstract**

A network node includes: a reception unit configured to receive a service request or a PDU (Protocol Data Unit) session establishment request from a terminal; and a control unit configured to perform verification related to a requirement of the terminal to be connected to a network. In a case where the verification by the control unit is successful, the service is provided to the terminal, and, in a case where the verification fails, the service is not provided to the terminal.

## Description

### FIELD OF THE INVENTION

The present invention relates to a network node and a communication method in a communication system.

### BACKGROUND OF THE INVENTION

In 3GPP (3rd Generation Partnership Project), in order to achieve further larger system capacity, further faster data transmission speed, further lower latency in a wireless communication section, etc., a wireless communication method called 5G or NR (New Radio) has been discussed (hereinafter, the wireless communication method is referred to as "5G" or "NR"). In 5G, various wireless technologies have been discussed in order to meet requirements including latency equal to or less than 1 ms in a wireless section while realizing a throughput equal to or greater than 10 Gbps.

In NR, an architecture has been discussed which includes: 5GC (5G Core Network) corresponding to EPC (Evolved Packet Core) that is a core network in an LTE (Long Term Evolution) network architecture; and NG-RAN (Next Generation - Radio Access Network) corresponding to E-UTRAN (Evolved Universal Terrestrial Radio Access Network) that is a RAN (Radio Access Network) in the LTE network architecture (e.g., non-patent document 1).

In addition, currently, NTN (Non-Terrestrial Network) is being discussed (for example, non-patent document 2). The NTN provides services to an area that cannot be covered by a terrestrial 5G network mainly due to the cost aspect, by using a non-terrestrial network such as a satellite.

### Citation List

### Non-Patent Document

Non-Patent Document 1: 3GPP TS 23.501 V16.8.0 (2021-03)
Non-Patent Document 2: 3GPP TR 36.763 V0.4.0 (2021-05)

### SUMMARY OF THE INVENTION

### TECHNICAL PROBLEM

For example, in the NTN using satellite communications, the cell or the area for each beam is very wide as compared with the terrestrial network (Terrestrial Network, TN), and thus, multiple countries can be within the service area at the same time. Therefore, it is assumed that a terminal that is registered to a core network of one country moves to another country. Here, there is a possibility that the core network of the one country provides a service to the terminal that is located in the another country.

The present invention has been made in view of the foregoing and is intended not to provide a terminal with services before verification by the network.

### SOLUTION TO PROBLEM

According to the disclosed technique, a network node is provided. The network node includes: a reception unit configured to receive a service request or a PDU (Protocol Data Unit) session establishment request from a terminal; and a control unit configured to perform verification related to a requirement of the terminal to be connected to a network. In a case where the verification by the control unit is successful, the service is provided to the terminal, and, in a case where the verification fails, the service is not provided to the terminal.

### ADVANTAGEOUS EFFECTS OF INVENTION

According to the disclosed technique, a terminal is not provided with services before verification by the network.

### BRIEF DESCRIPTION OF THE DRAWINGS

[Fig. 1] Fig. 1 is a drawing illustrating an example (1) of NTN.
[Fig. 2] Fig. 2 is a drawing illustrating an example (2) of NTN.
[Fig. 3] Fig. 3 is a drawing illustrating an example of a network.

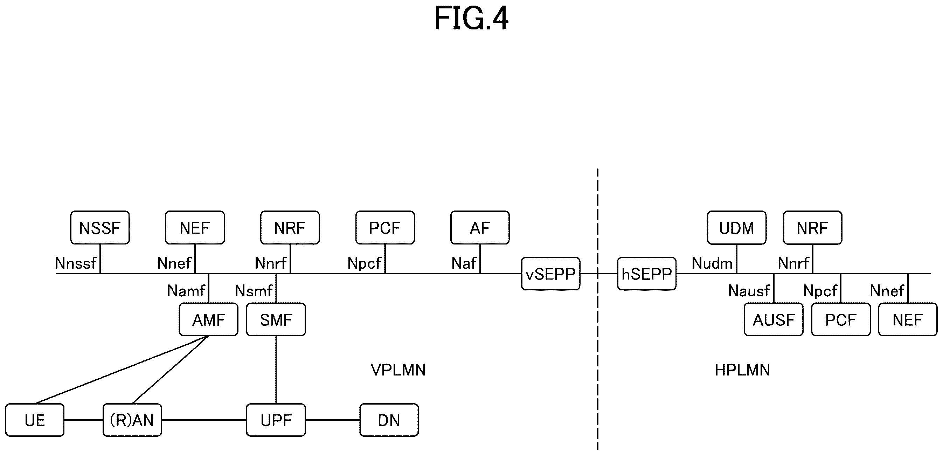

[Fig. 4] Fig. 4 is a drawing illustrating an example of a network under a roaming environment.
[Fig. 5] Fig. 5 is a drawing illustrating an example of an environment in an embodiment of the present invention.
[Fig. 6] Fig. 6 is a sequence diagram illustrating an example of a handover in an embodiment of the present invention.
[Fig. 7] Fig. 7 is a sequence diagram illustrating an example (1) of a service request in an embodiment of the present invention.
[Fig. 8] Fig. 8 is a sequence diagram illustrating an example (2) of a service request in an embodiment of the present invention.
[Fig. 9] Fig. 9 is a sequence diagram illustrating an example (3) of a service request in an embodiment of the present invention.
[Fig. 10] Fig. 10 is a sequence diagram illustrating an example (1) of a PDU session establishment in an embodiment of the present invention.
[Fig. 11] Fig. 11 is a sequence diagram illustrating an example (2) of a PDU session establishment in an embodiment of the present invention.
[Fig. 12] Fig. 12 is a sequence diagram illustrating an example (3) of a PDU session establishment in an embodiment of the present invention.
[Fig. 13] Fig. 13 is a drawing illustrating an example of a functional structure of a base station 10 in an embodiment of the present invention.
[Fig. 14] Fig. 14 is a drawing illustrating an example of a functional structure of a terminal 20 in an embodiment of the present invention.
[Fig. 15] Fig. 15 is a drawing illustrating an example of a hardware structure of the base station 10 and the terminal 20 in an embodiment of the present invention.

### DETAILED DESCRIPTION OF THE PREFERRED EMBODIMENTS

In the following, referring to the drawings, one or more embodiments of the present invention will be described. It should be noted that the embodiments described below are examples. Embodiments of the present invention are not limited to the following embodiments.

In operations of a wireless communication system according to an embodiment of the present invention, conventional techniques will be used appropriately. With respect to the above, for example, the conventional techniques are related to, but not limited to, the existing LTE. Further, it is assumed that the term "LTE" used in the present specification has, unless otherwise specifically mentioned, a broad meaning including a scheme of LTE-Advanced and a scheme after LTE-Advanced (e.g., NR), or wireless LAN (Local Area Network).

Further, in an embodiment of the present invention, the expression, radio parameters are "configured" may mean that a predetermined value is pre-configured, or may mean that a radio parameter indicated by a network node 30 or a terminal 20 is configured.

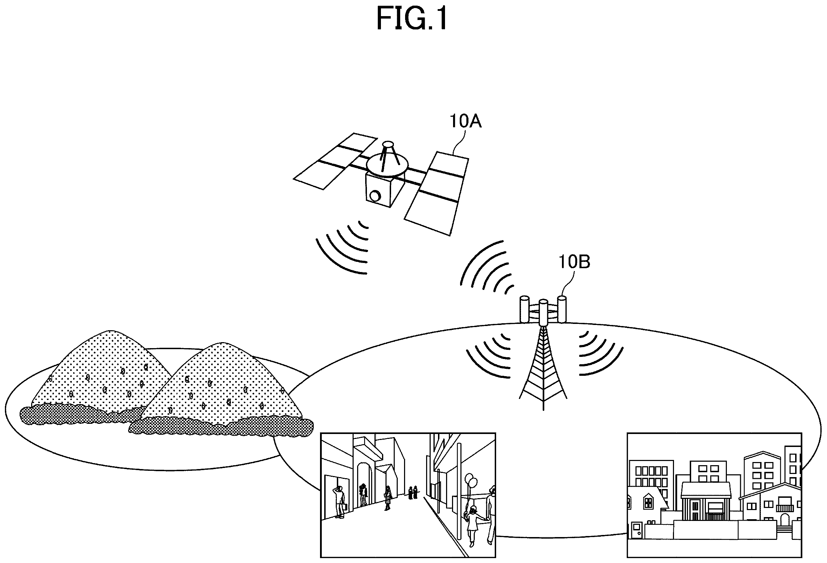

Fig. 1 is a drawing illustrating an example (1) of NTN. The NTN provides services to an area that cannot be covered by a terrestrial 5G network mainly due to the cost aspect, by using a non-terrestrial network such as a satellite. Services with higher reliability may be provided by the NTN. For example, NTN may be assumed to be applied to IoT (Inter of things), ships, buses, trains, and critical communications. Further, NTN has scalability according to efficient multi-cast or broadcast.

As an example of NTN, as illustrated in Fig. 1, a satellite 10A can provide services to an area such as a mountainous area for which a terrestrial base station is not arranged, by performing retransmission of a signal transmitted by a terrestrial base station 10B.

Note that the terrestrial 5G network may have a structure as described below. The terrestrial 5G network may include one or more base stations 10 and terminals 20. The base station 10 is a communication device that provides one or more cells and performs wireless communications with the terminal 20. Physical resources of the radio signal may be defined in the time domain and the frequency domain, the time domain may be defined by the number of OFDM symbols, and the frequency domain may be defined by the number of sub-carriers or resource blocks. The base station 10 transmits a synchronization signal and system information to the terminal 20. The synchronization signal is, for example, an NR-PSS and an NR-SSS. The system information is transmitted via, for example, a NR-PBCH, and may be referred to as broadcast information.

The base station 10 transmits a control signal or data in DL (Downlink) to the terminal 20 and receives a control signal or data in UL (Uplink) from the terminal 20. The base station 10 and the terminal 20 are capable of transmitting and receiving a signal by performing the beamforming. Further, the base station 10 and the terminal 20 can both apply MIMO (Multiple Input Multiple Output) communication to DL or UL. Further, both the base station 10 and terminal 20 may perform communications via an SCell (Secondary Cell) and a PCell (Primary Cell) using CA (Carrier Aggregation).

The terminal 20 may be a communication apparatus that includes a wireless communication function such as a smart-phone, a mobile phone, a tablet, a wearable terminal, a communication module for M2M (Machine-to-Machine), or the like. The terminal 20 uses various communication services provided by a wireless communication system, by receiving a control signal or data in DL from the base station 10 and transmitting a control signal or data in UL to the base station 10.

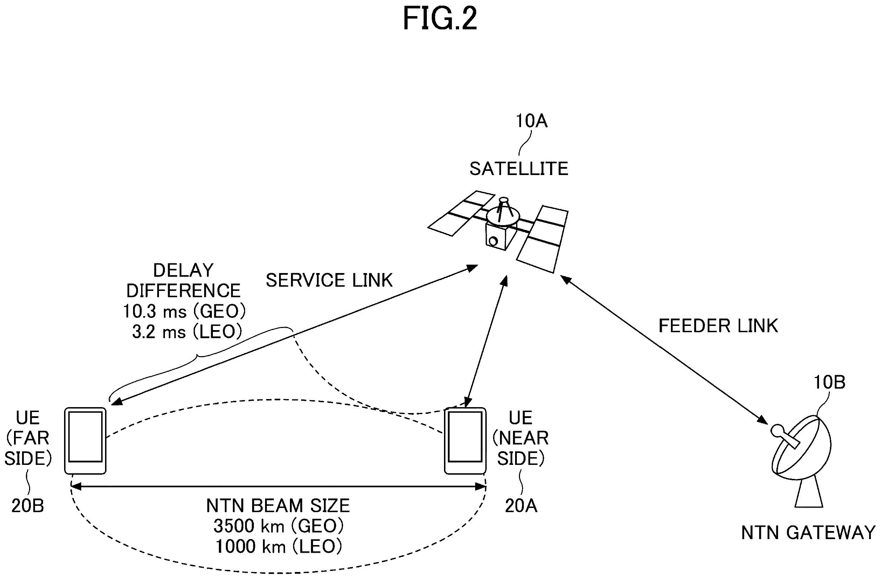

Fig. 2 is a drawing illustrating an example (2) of NTN. In NTN, a cell or an area for each beam is very large when compared with a terrestrial network, TN. Fig. 2 illustrates an example of NTN including retransmissions by a satellite. The connection between a satellite 10A and an NTN gateway 10B is referred to as a feeder link, and the connection between the satellite 10A and a UE 20 is referred to as a service link.

As illustrated in Fig. 2, the delay difference between the near side UE 20A and the far side UE 20B is, for example, 10.3 ms in a case of GEO (Geosynchronous orbit), and 3.2 ms in a case of LEO (Low Earth orbit). Further, the beam size in NTN is, for example, 3500 km in a case of GEO, and 1000 km in a case of LEO.

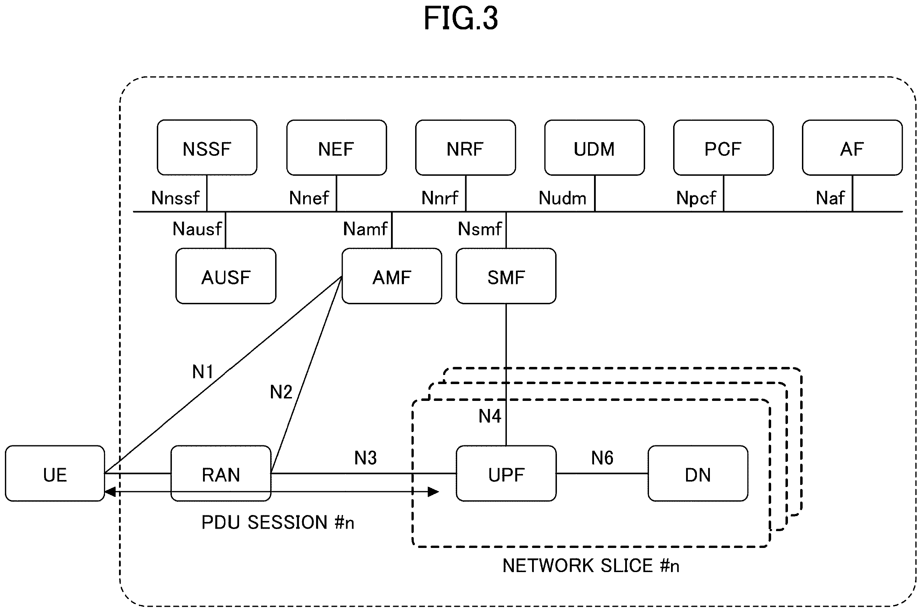

Fig. 3 is a drawing illustrating an example of a network. As illustrated in Fig. 3, the communication system includes a UE that is a terminal 20, and a plurality of network nodes 30. Hereafter, one network node 30 corresponds to each function, but multiple functions may be implemented by one network node 30 or one function may be implemented by multiple network nodes 30. The "connections" described below may be either a logical connection or a physical connection.

RAN (Radio Access Network) is a network node 30 with wireless access functions, may include a base station 10, and is connected to UE, AMF (Access and Mobility Management Function), and UPF (User plane function). The AMF is a network node 30 having functions of, for example, terminating the RAN interface, terminating the NAS (Non-Access Stratum), managing registration, managing connection, managing reachability, and managing mobility. The UPF is a network node 30 interconnected with DN (Data Network), and has functions such as a PDU (Protocol Data Unit) session point to an external unit, routing and forwarding packets, and QoS (Quality of Service) handling of the user plane. UPF and DN are included in a network slice. In a wireless communication network in an embodiment of the present invention, multiple network slices are included.

AMF is connected to UE, RAN, SMF (Session Management Function), NSSF (Network Slice Selection Function), NEF (Network Exposure Function), NRF (Network Repository Function), UDM (Unified Data Management), AUSF (Authentication Server Function), PCF (Policy Control Function), and AF (Application Function). AMF, SMF, NSSF, NEF, NRF, UDM, AUSF, PCF, and AF are network nodes 30 connected to each other via interfaces Namf, Nsmf, Nnssf, Nnef, Nnrf, Nudm, Nausf, Npcf, Naf based on the respective services.

The SMF is a network node 30 having functions such as session management, Internet Protocol (IP) address assignment and management of UE, DHCP (Dynamic Host Configuration Protocol) function, ARP (Address Resolution Protocol) proxy, and roaming function. The NEF is a network node 30 having a function of indicating capabilities and events to other NFs (Network Functions). The NSSF is a network node 30 having functions of, for example, selecting the network slice to which the UE is to be connected, determining the allowed NSSAI (Network Slice Selection Assistance Information), determining the configured NSSAI, and determining the AMF set to which the UE is to be connected. PCF is a network node 30 having a function of performing policy control of the network. AF is a network node 30 having a function of controlling an application server. NRF is a network node 30 having a function of discovering NF instances which provide services. UDM is a network node 30 that manages subscriber data and authentication data. UDM is connected to UDR (Unified Data Repository) that stores the above-described data.

Fig. 3 is a drawing illustrating an example of a network under a roaming environment. As illustrated in Fig. 3, the network includes a UE that is a terminal 20, and a plurality of network nodes 30. Hereafter, one network node 30 corresponds to each function, but multiple functions may be implemented by one network node 30 or one function may be implemented by multiple network nodes 30. The "connections" described below may be either a logical connection or a physical connection.

RAN is a network node 30 having a wireless access function, and is connected to UE, AMF, and UPF. AMF is a network node 30 having functions of, for example, terminating the RAN interface, terminating NAS, managing registration, managing connection, managing reachability, and managing mobility. UPF is a network node 30 having functions of, for example, a PDU session point to an external unit mutually connected to DN, routing and forwarding of packets, and QoS handling of the user plane. UPF and DN are included in a network slice. In a wireless communication network in an embodiment of the present invention, multiple network slices are included.

AMF is connected to UE, RAN, SMF, NSSF, NEF, NRF, UDM, AUSF, PCF, AF, and SEPP (Security Edge Protection Proxy). AMF, SMF, NSSF, NEF, NRF, UDM, AUSF, PCF, and AF are network nodes 30 connected to each other via interfaces Namf, Nsmf, Nnssf, Nnef, Nnrf, Nudm, Nausf, Npcf, and Naf based on the respective services.

SMF is a network node 30 having functions such as session management, IP address assignment and management of UE, a DHCP function, an ARP proxy, and a roaming function. NEF is a network node 30 having a function of indicating capabilities and events to other NFs. NSSF is a network node 30 having functions of, for example, selecting the network slice to which the UE is to be connected, determining NSSAI to be allowed, determining NSSAI to be configured, and determining AMF set to which the UE is to be connected. PCF is a network node 30 having a function of performing policy control of the network. AF is a network node 30 having a function of controlling an application server. NRF is a network node 30 having a function of discovering NF instances which provide services. SEPP is a non-transparent proxy and filters control plane messages between PLMNs (Public Land Mobile Networks). vSEPP shown in Fig. 3 is a SEPP in a visited network, and hSEPP is a SEPP in a home network.

As shown in Fig. 3, the UE is in a roaming environment connected to RAN and AMF in VPLMN (Visited PLMN). VPLMN and HPLMN (Home PLMN) are connected via vSEPP and hSEPP. The UE can communicate with the UDM of HPLMN via, for example, the AMF of VPLMN.

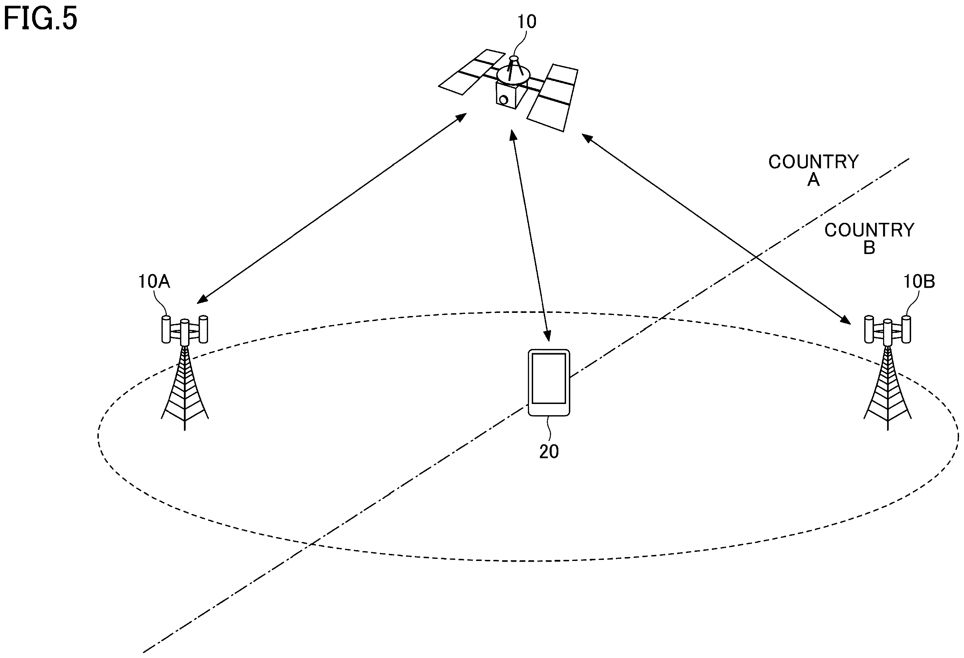

Fig. 5 is a drawing illustrating an example of an environment in an embodiment of the present invention. As illustrated in Fig. 5, the NTN using the satellite communication is assumed. A satellite 10 covers a country A and a country B. Here, it is assumed that a terminal 20 that is geographically located in a country A moves to a country B after the registration to a network 10A of the country A. According to the current technical specifications, an operation is desired in which a terrestrial station NG-RAN (Radio Access Network) initiates an N2 handover within the NG-RAN to switch the AMF.

However, it is difficult for the NG-RAN to initiate the N2 handover because the location information of the terminal cannot be obtained, and it is difficult for the AMF to initiate the N2 handover to switch to another AMF even if the AMF recognizes that the terminal is geographically located in another country.

Therefore, the AMF may explicitly indicate the PLMN that is a handover destination for the target UE and may trigger the handover by the NG-RAN.

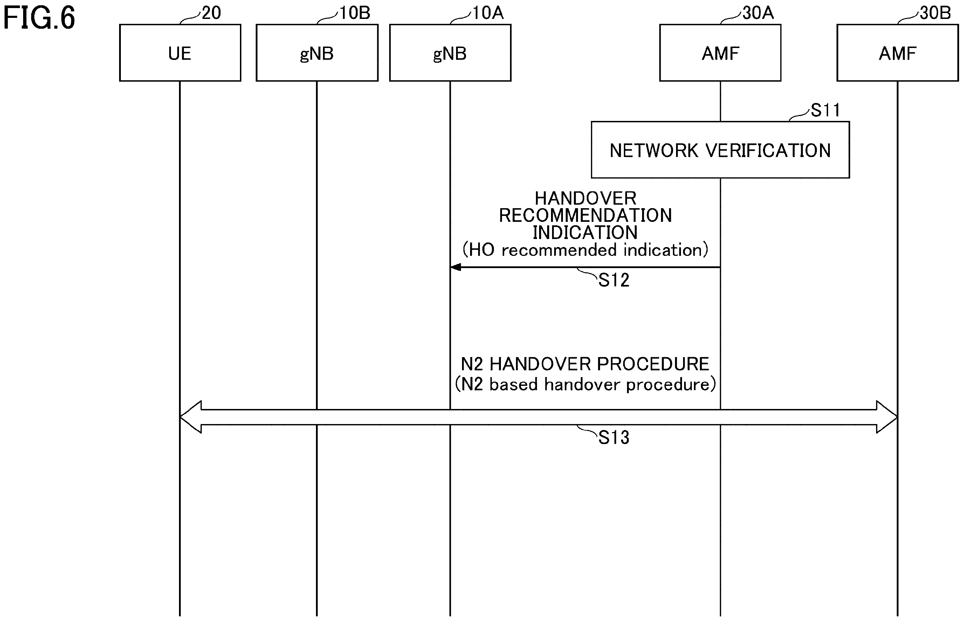

Fig. 6 is a sequence diagram illustrating an example of a handover in an embodiment of the present invention. It is assumed that a gNB 10A and an AMF 30A belong to a network of the country A, and a gNB 10B and an AMF 30B belong to a network of the country B. It is assumed that a UE 20 has been registered to the AMF 30A when the UE 20 is geographically located in the country A before steps illustrated in Fig. 6, and, thereafter, the UE 20 geographically moves to the country B.

In step S11, the AMF 30A performs network verification. For example, the network verification may mean a verification of the geographical location of the UE, and may be performed by using the 5GC-NI-LR (Network Induced Location Request) procedure. According to the network verification, the AMF 30A recognizes that the UE 20 is geographically located in the country B.

Note that, in a case where the network verification is performed in a state in which the geographical location of the UE 20 does not correspond to the network to which the UE 20 is registered, for example, in a state in which the UE 20 is geographically located in the country B and is registered to a network 10A of the country A, a result that indicates that the network verification has failed or that the network verification has not been finished may be obtained. It may be assumed that, in a case where the network verification is performed in a state in which the geographical location of the UE 20 corresponds to the network to which the UE 20 is registered, for example, in a state in which the UE 20 is geographically located in the country A and is registered to a network 10A of the country A, a result that indicates that the network verification is successful or that the network verification has been finished is obtained.

In subsequent step S12, the AMF 30A transmits a handover recommendation indication (HO recommended indication) to the gNB 10A. The handover recommendation indication may include information indicating a handover destination PLMN as a target. In addition, for example, in a case where the NG-RAN does not have a terminal context, the handover recommendation indication may be included in the initial context setup request (Initial Context setup request). In addition, for example, in a case where the NG-RAN has a terminal context, the handover recommendation indication may be included in the terminal context modification request (UE Context Modification request).

In subsequent step S13, an N2 handover procedure (N2 based handover procedure) is performed among the UE 20, the gNB 10A, the AMF 30A, the AMF 30B, and the gNB 10B, and the UE 20 performs a handover from the AMF 30A and the gNB 10A to the AMF 30B and the gNB 10B.

According to the above-described steps, in Fig. 5, in a case where the terminal 20 that has registered to the network 10A of the country A moves to the country B, the network 10A of the country A can trigger the handover and can cause the terminal 20 to perform a handover to the network 10B of the country B.

Note that the network verification in step S11 is not limited to the verification of the geographical location of the terminal 20, and may be a verification related to another type of requirement of the terminal 20 to be connected to the network.

As another example, as illustrated in Fig. 5, the NTN using the satellite communication is assumed. A satellite 10 covers a country A and a country B. Here, a terminal 20 that is geographically located in a country A is registered to a network 10A of a country A and a PDU session is established. Thereafter, it is assumed that the terminal 20 transitions to an Idle mode and moves to a country B. According to the current specifications, the network 10A of the country A first completes the service request procedure, verifies the location of the terminal 20 by using the 5GC-NI-LR procedure, and deregisters the terminal 20 at the time when the terminal 20 is recognized to be located in the country B.

There is a problem in the above-described operation. There may be a case in which the terminal 20 activates the PDU session with respect to the network 10A of the country A and it is possible for the terminal 20 to use services of the network 10A of the country A even for a short period of time. In other words, the network 10A of the country A may violate the regulations of the country B regarding the communication interception. In addition, for example, in a case where the terminal 20 initiates an emergency call, if the network 10A of the country A connects the emergency call to the PSAP (Public safety Answering Point, emergency response agency) of the country A, and subsequently, the emergency call is disconnected, then a callback from the PSAP to the terminal 20 cannot be performed.

Therefore, when the terminal 20 initiates the service request procedure, the AMF is not required to transfer the request of the terminal 20 to the SMF until the network verification has been completed.

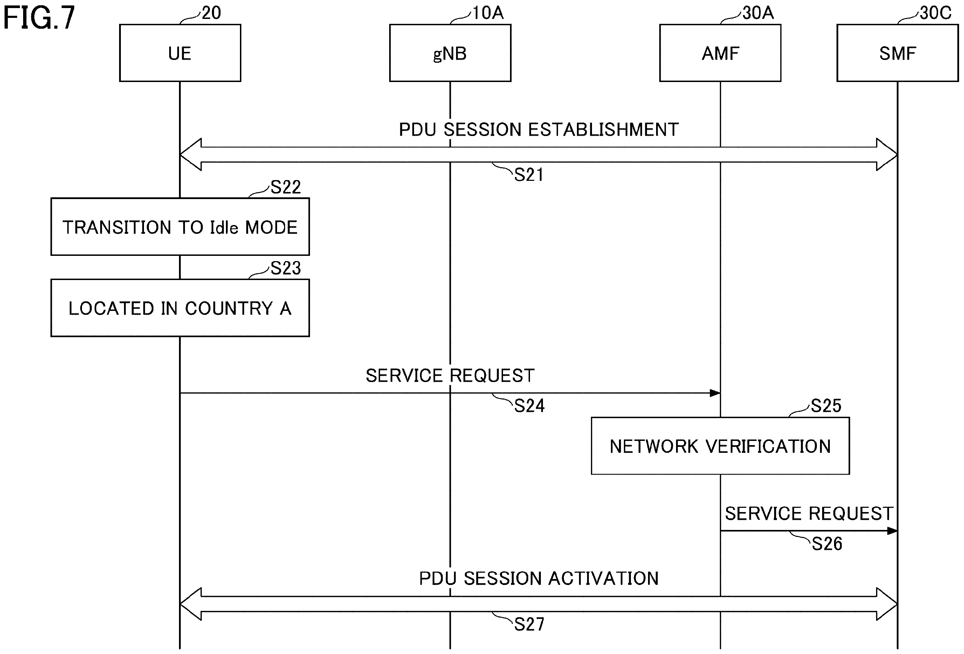

Fig. 7 is a sequence diagram illustrating an example (1) of a service request in an embodiment of the present invention. It is assumed that a gNB 10A, an AMF 30A, and an SMF 30C belong to a network of a country A. It is assumed that a UE 20 has been registered to the AMF 30A when the UE 20 is geographically located in the country A before steps illustrated in Fig. 7.

In step S21, the UE 20 establishes a PDU session via the SMF 30C. In subsequent step S22, the UE 20 transitions to an Idle mode. In subsequent step S23, it is assumed that the UE 20 is located in the country A. In subsequent step S24, the UE 20 transmits a service request to the AMF 30A.

In subsequent step S25, the AMF 30A performs network verification. For example, the network verification may mean verification of the geographical location of the UE, and may be performed by using the 5GC-NI-LR procedure. According to the network verification, the AMF 30A recognizes that the UE 20 is geographically located in the country A.

In subsequent step S26, the AMF 30A transfers the service request of the UE 20 to the SMF 30C. In subsequent step S27, the UE 20 activates a PDU session via the SMF 30C and uses normal services.

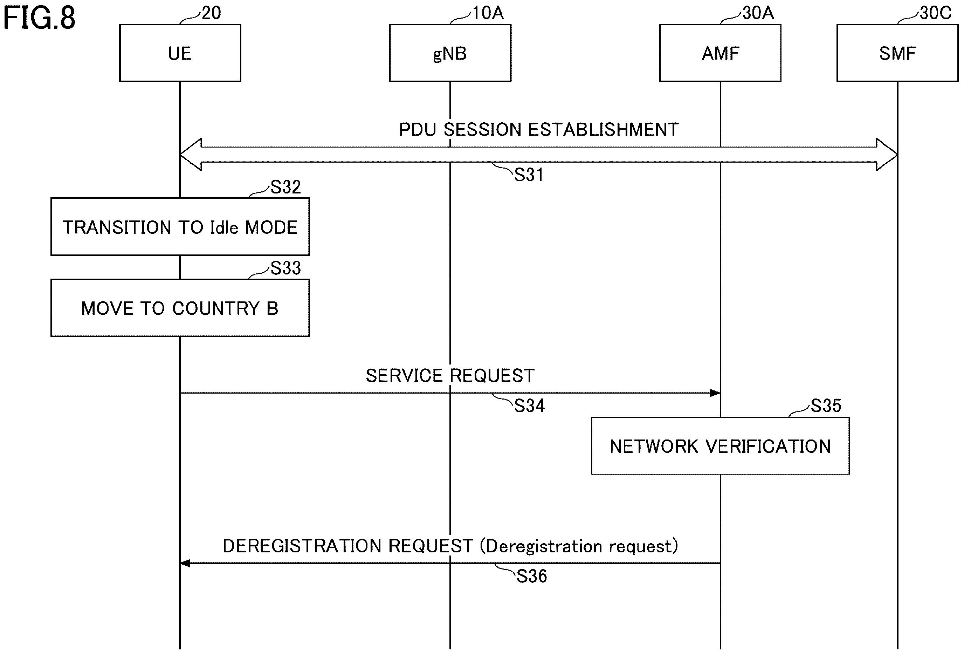

Fig. 8 is a sequence diagram illustrating an example (2) of a service request in an embodiment of the present invention. It is assumed that a gNB 10A, an AMF 30A, and an SMF 30C belong to a network of a country A. It is assumed that a UE 20 has been registered to the AMF 30A when the UE 20 is geographically located in the country A before steps illustrated in Fig. 8.

In step S31, the UE 20 establishes a PDU session via the SMF 30C. In subsequent step S32, the UE 20 transitions to an Idle mode. In subsequent step S33, it is assumed that the UE 20 moves to the country B. In subsequent step S34, the UE 20 transmits a service request to the AMF 30A.

In subsequent step S35, the AMF 30A performs network verification. For example, the network verification may mean verification of the geographical location of the UE, and may be performed by using the 5GC-NI-LR procedure. According to the network verification, the AMF 30A recognizes that the UE 20 is geographically located in the country B. In subsequent step S36, the AMF 30A does not transfer the service request to the SMF 30C and transmits a deregistration request (Deregistration request) to the UE 20. Here, the AMF 30A may further transmit information indicating an MCC in which the UE 20 is geographically located to the UE 20.

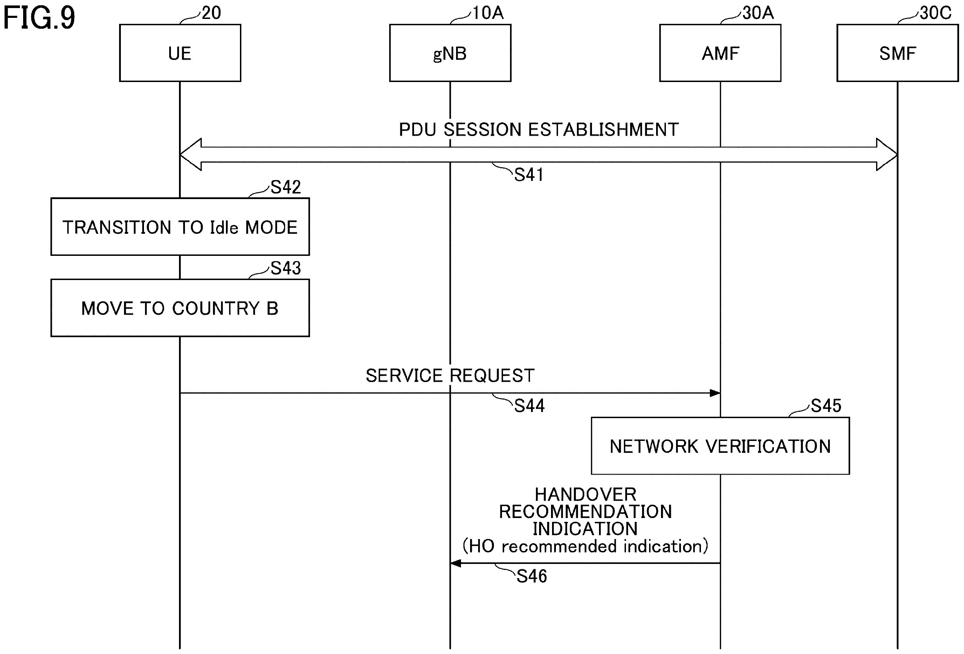

Fig. 9 is a sequence diagram illustrating an example (3) of a service request in an embodiment of the present invention. It is assumed that a gNB 10A, an AMF 30A, and an SMF 30C belong to a network of a country A. It is assumed that a UE 20 has been registered to the AMF 30A when the UE 20 is geographically located in the country A before steps illustrated in Fig. 9.

In step S41, the UE 20 establishes a PDU session via the SMF 30C. In subsequent step S42, the UE 20 transitions to an Idle mode. In subsequent step S43, it is assumed that the UE 20 moves to the country B. In subsequent step S44, the UE 20 transmits a service request to the AMF 30A.

In subsequent step S45, the AMF 30A performs network verification. For example, the network verification may mean verification of the geographical location of the UE, and may be performed by using the 5GC-NI-LR procedure. According to the network verification, the AMF 30A recognizes that the UE 20 is geographically located in the country B. In subsequent step S46, the AMF 30A transmits a handover recommendation indication (HO recommended indication) to the gNB 10A without transferring the service request to the SMF 30C. The step S46 may be performed in the same way as the step S12 illustrated in Fig. 6, and, subsequently, the N2 handover procedure may be performed by targeting the network of the country B.

According to the above-described steps, in Fig. 5, in a case where the terminal 20 that has registered to the network 10A of the country A moves to the country B, the network 10A of the country A can deregister the terminal 20 or the network 10A of the country A can trigger the handover and cause the terminal 20 to perform a handover to the network 10B of the country B.

Note that the network verification in step S25, step S35, and step S45 is not limited to the verification of the geographical location of the terminal 20, and may be a verification related to another type of requirement of the terminal 20 to be connected to the network.

As another example, as illustrated in Fig. 5, the NTN using the satellite communication is assumed. A satellite 10 covers a country A and a country B. Here, it is assumed that a terminal 20 that is geographically located in the country B incorrectly understands the terminal 20 itself to be located in the country A and performs registration to the network 10A of the country A. According to the current specifications, the network 10A of the country A first performs connection to the terminal by using the registration procedure, verifies the location of the terminal 20 by using the 5GC-NI-LR procedure, and deregisters the terminal 20 at the time when the terminal 20 is recognized to be located in the country B. In a case where the terminal 20 requests the PDU session establishment immediately after the registration procedure-with-request (Follow-on request), there may be a case in which the terminal 20 establishes a PDU session with the network 10A of the country A.

There is a problem in the above-described operation. The terminal 20 can use the service of the network 10A of the country A even for a short period of time. In other words, the network 10A of the country A may violate the regulations of the country B regarding the communication interception. In addition, for example, in a case where the terminal 20 initiates an emergency call, if the network 10A of the country A connects the emergency call to the PSAP of the country A, and thereafter, the emergency call is disconnected, then a callback from the PSAP to the terminal 20 cannot be performed.

Therefore, when the terminal 20 requests the PDU session establishment immediately after the registration procedure-with-request, the AMF is not required to transfer the PDU session establishment request of the terminal 20 to the SMF until the network verification has been completed.

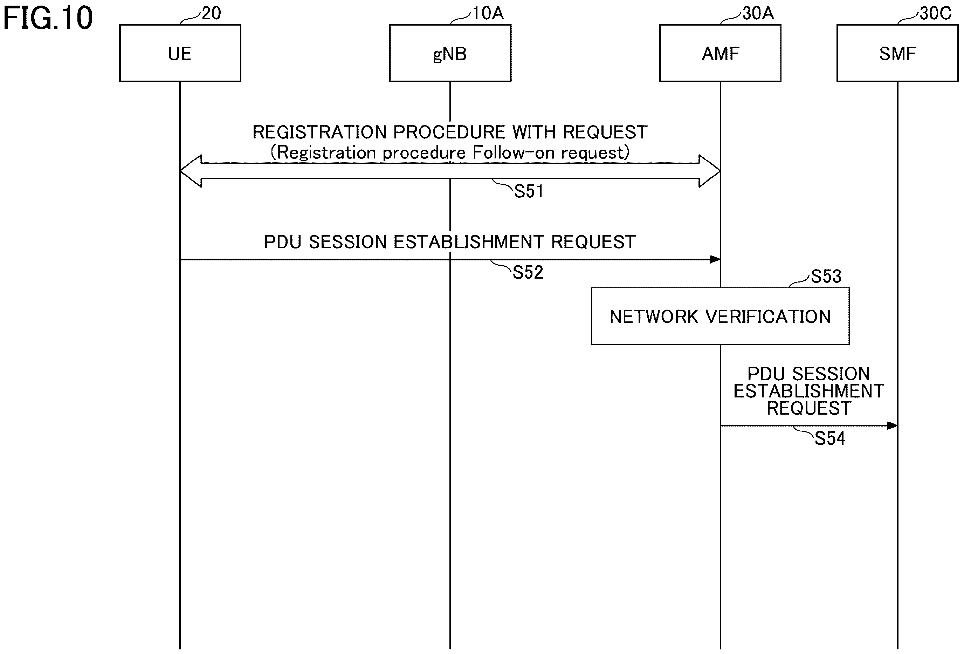

Fig. 10 is a sequence diagram illustrating an example (1) of a PDU session establishment in an embodiment of the present invention. It is assumed that a gNB 10A, an AMF 30A, and an SMF 30C belong to a network of a country A.

In step S51, the UE 20 performs the registration procedure-with-request (Registration procedure Follow-on request) with the AMF 30A. In subsequent step S52, the UE 20 transmits a PDU session establishment request to the AMF 30A. In subsequent step S53, the AMF 30A performs network verification. For example, the network verification may mean verification of the geographical location of the UE, and may be performed by using the 5GC-NI-LR procedure. According to the network verification, the AMF 30A recognizes that the UE 20 is geographically located in the country A. In subsequent step S54, the PDU session establishment request is transferred to the SMF 30C. Subsequently, the UE 20 may establish the PDU session via the SMF 30C, and may use normal services.

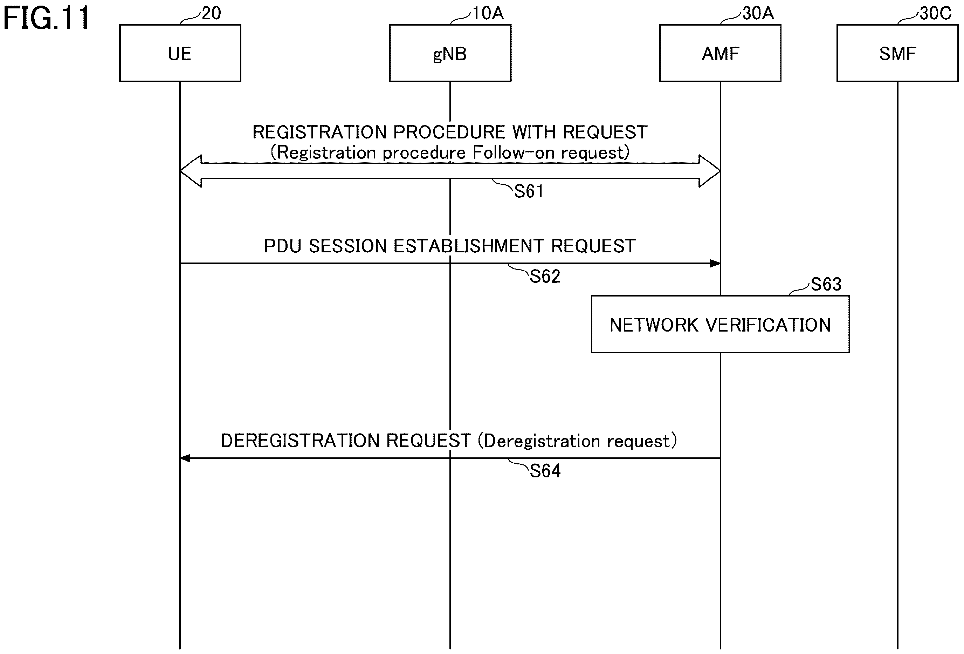

Fig. 11 is a sequence diagram illustrating an example (2) of a PDU session establishment in an embodiment of the present invention. It is assumed that a gNB 10A, an AMF 30A, and an SMF 30C belong to a network of a country A.

In step S61, the UE 20 performs the registration procedure-with-request (Registration procedure Follow-on request) with the AMF 30A. In subsequent step S62, the UE 20 transmits a PDU session establishment request to the AMF 30A. In subsequent step S63, the AMF 30A performs network verification. For example, the network verification may mean verification of the geographical location of the UE, and may be performed by using the 5GC-NI-LR procedure. According to the network verification, the AMF 30A recognizes that the UE 20 is geographically located in the country B. In subsequent step S64, the AMF 30A transmits a deregistration request (Deregistration request) to the UE 20 without transferring the PDU session establishment request to the SMF 30C. Here, the AMF 30A may further transmit information indicating an MCC in which the UE 20 is geographically located to the UE 20.

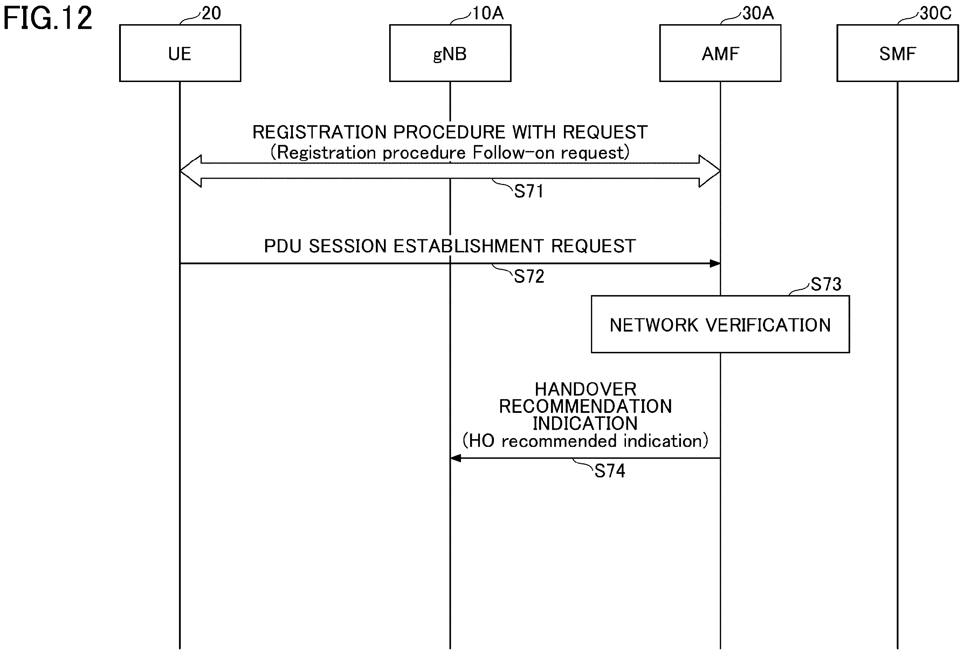

Fig. 12 is a sequence diagram illustrating an example (3) of a PDU session establishment in an embodiment of the present invention. It is assumed that a gNB 10A, an AMF 30A, and an SMF 30C belong to a network of a country A.

In step S71, the UE 20 performs the registration procedure-with-request (Registration procedure Follow-on request) with the AMF 30A. In subsequent step S72, the UE 20 transmits a PDU session establishment request to the AMF 30A. In subsequent step S73, the AMF 30A performs network verification. For example, the network verification may mean verification of the geographical location of the UE, and may be performed by using the 5GC-NI-LR procedure. According to the network verification, the AMF 30A recognizes that the UE 20 is geographically located in the country B. In subsequent step S74, the AMF 30A transmits a handover recommendation indication (HO recommended indication) to the gNB 10A. The step S74 may be performed in the same way as the step S12 illustrated in Fig. 6, and, subsequently, the N2 handover procedure may be performed by targeting the network of the country B.

According to the above-described steps, in Fig. 5, with respect to the terminal 20 that is registered to the network 10A of the country A in a state in which the terminal 20 is located in the country B, the network 10A of the country A can deregister the terminal 20 or the network 10A of the country A can trigger a handover and cause the terminal 20 to perform the handover to the network 10B of the country B.

Note that the network verification in step S53, step S63, and step S73 is not limited to the verification of the geographical location of the terminal 20, and may be a verification related to another type of requirement of the terminal 20 to be connected to the network.

According to the above-described embodiment, before providing services to the terminal, the network can verify whether the requirement of the terminal to be connected to the network is satisfied.

In other words, a terminal is not provided with services before verification by the network.

### (Device configuration)

Next, a functional configuration example of the base station 10, network node 30 and the terminal 20 that perform processes and operations described above will be described. The base station 10, the network node 30, and the terminal 20 include functions for implementing the embodiments described above. It should be noted, however, that each of the base station 10, the network node 30, and the terminal 20 may include only some of the functions in the embodiments.

### <Base station 10 and network node 30>

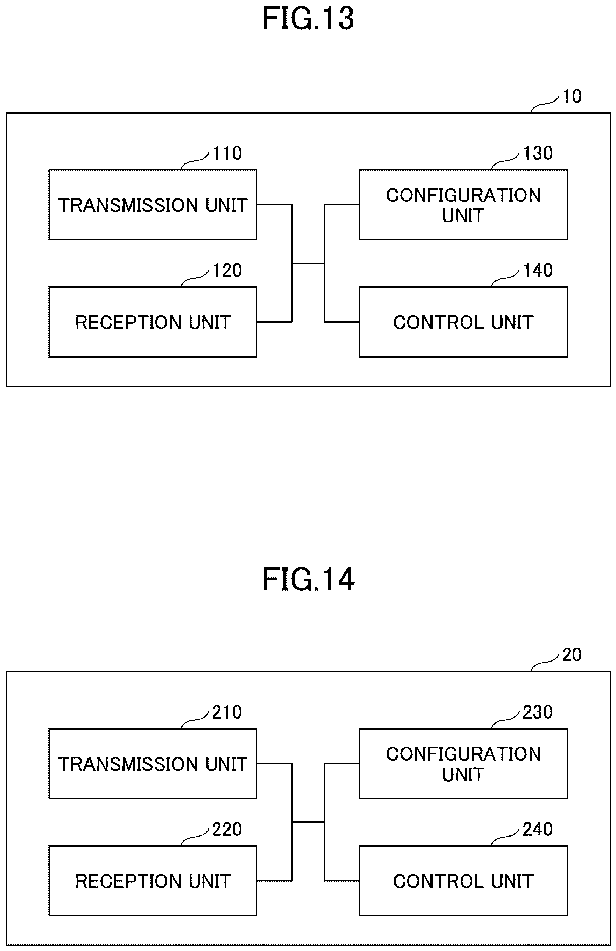

Fig. 13 is a diagram illustrating an example of a functional configuration of the base station 10. As shown in Fig. 13, the base station 10 includes a transmission unit 110, a reception unit 120, a configuration unit 130, and a control unit 140. The functional structure illustrated in Fig. 13 is merely an example. Functional divisions and names of functional units may be anything as long as operations according to an embodiment of the present invention can be performed. Note that the network node 30 may have the same functional configuration as the base station 10. In addition, the network nodes 30 having multiple different functions in the system architecture may be composed of multiple network nodes 30 separated for each function.

The transmission unit 110 includes a function for generating a signal to be transmitted to the terminal 20 or to another network node 30 and transmitting the signal in a wired manner or wireless manner. The reception unit 120 includes a function for receiving various signals transmitted from the terminal 20 or another network node 30, and for acquiring, for example, information of an upper layer from the received signals.

The configuration unit 130 stores preset configuration information and various configuration information items to be transmitted to the terminal 20 in a storage apparatus and reads the preset configuration information from the storage apparatus if necessary. Contents of the configuration information are, for example, configurations related to communications using the NTN.

The control unit 140 performs processing related to communications using the NTN as described in the embodiments. Further, the control unit 140 performs a process related to communications with the terminal 20. Further, the control unit 140 performs a process related to geographical location verification of the terminal 20. The functional units related to signal transmission in the control unit 140 may be included in the transmission unit 110, and the functional units related to signal reception in the control unit 140 may be included in the reception unit 120.

### <Terminal 20>

Fig. 14 is a diagram illustrating an example of a functional configuration of the terminal 20. As shown in FIG. 14, the terminal 20 includes a transmission unit 210, a reception unit 220, a configuration unit 230, and a control unit 240. The functional structure illustrated in Fig. 14 is merely an example. Functional divisions and names of functional units may be anything as long as operations according to an embodiment of the present invention can be performed.

The transmission unit 210 generates a transmission signal from transmission data and transmits the transmission signal wirelessly. The reception unit 220 receives various signals wirelessly and obtains upper layer signals from the received physical layer signals. Further, the reception unit 220 has a function of receiving NR-PSS, NR-SSS, NR-PBCH, DL/UL control signals, or reference signals transmitted from the network node 30.

The configuration unit 230 stores various types of configuration information received from the network node 30 by the reception unit 220 in the storage device and reads the configuration information from the storage device as necessary. In addition, the configuration unit 230 also stores pre-configured configuration information. Contents of the configuration information are, for example, configurations related to communications using the NTN.

The control unit 240 performs a process related to the connection control to the network and the network slice as described in the embodiments. The functional units related to signal transmission in the control unit 240 may be included in the transmission unit 210, and the functional units related to signal reception in the control unit 240 may be included in the reception unit 220.

### (Hardware structure)

In the above functional structure diagrams used for describing an embodiment of the present invention (Fig. 13 and Fig. 14), functional unit blocks are shown. The functional blocks (function units) are realized by a freely-selected combination of hardware and/or software. Further, realizing means of each functional block is not limited in particular. In other words, each functional block may be realized by a single apparatus in which multiple elements are coupled physically and/or logically, or may be realized by two or more apparatuses that are physically and/or logically separated and are physically and/or logically connected (e.g., wired and/or wireless). The functional blocks may be realized by combining the above-described one or more apparatuses with software.

Functions include, but are not limited to, judging, determining, calculating, processing, deriving, investigating, searching, checking, receiving, transmitting, outputting, accessing, resolving, selecting, establishing, comparing, assuming, expecting, and deeming; broadcasting, notifying, communicating, forwarding, configuring, reconfiguring, allocating, mapping, and assigning, etc. For example, a functional block (component) that functions to transmit is called a transmitting unit or a transmitter. In either case, as described above, the implementation method is not particularly limited.

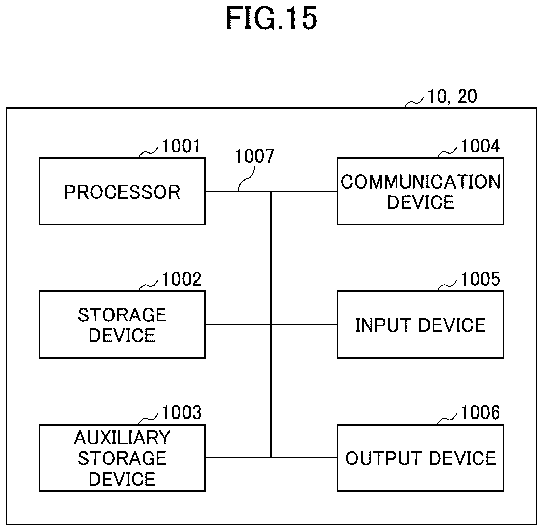

For example, the network node 30, terminal 20, etc., according to an embodiment of the present disclosure may function as a computer for processing the radio communication method of the present disclosure. Fig. 15 is a drawing illustrating an example of hardware structures of the base station 10 and terminal 20 according to an embodiment of the present invention. The network node 30 may have the same hardware configuration as the base station 10. Each of the above-described base station 10 and the terminal 20 may be physically a computer device including a processor 1001, a storage device 1002, an auxiliary storage device 1003, a communication device 1004, an input device 1005, an output device 1006, a bus 1007, etc.

It should be noted that, in the descriptions below, the term "apparatus" can be read as a circuit, a device, a unit, etc. The hardware structures of the base station 10 and terminal 20 may include one or more of each of the devices illustrated in the figure, or may not include some devices.

Each function in the base station 10 and terminal 20 is realized by having the processor 1001 perform an operation by reading predetermined software (programs) onto hardware such as the processor 1001 and the storage device 1002, and by controlling communication by the communication device 1004 and controlling at least one of reading and writing of data in the storage device 1002 and the auxiliary storage device 1003.

The processor 1001 controls the entire computer by, for example, controlling the operating system. The processor 1001 may include a central processing unit (CPU) including an interface with a peripheral apparatus, a control apparatus, a calculation apparatus, a register, etc. For example, the above-described control unit 140, control unit 240, and the like, may be implemented by the processor 1001.

Further, the processor 1001 reads out onto the storage device 1002 a program (program code), a software module, or data from the auxiliary storage device 1003 and/or the communication device 1004, and performs various processes according to the program, the software module, or the data. As the program, a program is used that causes the computer to perform at least a part of operations according to an embodiment of the present invention described above. For example, the control unit 140 of the base station 10 illustrated in Fig. 13 may be realized by control programs that are stored in the storage device 1002 and are executed by the processor 1001. Further, for example, the control unit 240 of the terminal 20 illustrated in Fig. 14 may be realized by control programs that are stored in the storage device 1002 and are executed by the processor 1001. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The storage device 1002 is a computer-readable recording medium, and may include at least one of a ROM (Read Only Memory), an EPROM (Erasable Programmable ROM), an EEPROM (Electrically Erasable Programmable ROM), a RAM (Random Access Memory), etc. The storage device 1002 may be referred to as a register, a cache, a main memory, etc. The storage device 1002 is capable of storing programs (program codes), software modules, or the like, that are executable for performing communication processes according to an embodiment of the present invention.

The auxiliary storage device 1003 is a computer-readable recording medium, and may include at least one of, for example, an optical disk such as a CD-ROM (Compact Disc ROM), a hard disk drive, a flexible disk, a magneto optical disk (e.g., compact disc, digital versatile disc, Blu-ray (registered trademark) disk), a smart card, a flash memory (e.g., card, stick, key drive), a floppy (registered trademark) disk, a magnetic strip, etc. The above recording medium may be a database including the storage device 1002 and/or the auxiliary storage device 1003, a server, or any other appropriate medium.

The communication device 1004 is hardware (transmission and reception device) for communicating with computers via at least one of a wired network and a wireless network, and may be referred to as a network device, a network controller, a network card, a communication module, etc. The communication device 1004 may comprise a high frequency switch, duplexer, filter, frequency synthesizer, or the like, for example, to implement at least one of a frequency division duplex (FDD) and a time division duplex (TDD). For example, the transmitting/receiving antenna, the amplifier unit, the transmitting/receiving unit, the transmission line interface, and the like, may be implemented by the communication device 1004. The transmitting/receiving unit may be physically or logically divided into a transmitting unit and a receiving unit.

The input device 1005 is an input device that receives an external input (e.g., keyboard, mouse, microphone, switch, button, sensor). The output device 1006 is an output device that outputs something to the outside (e.g., display, speaker, LED lamp). It should be noted that the input device 1005 and the output device 1006 may be integrated into a single device (e.g., touch panel).

Further, the apparatuses including the processor 1001, the storage device 1002, etc., are connected to each other via the bus 1007 used for communicating information. The bus 1007 may include a single bus, or may include different buses between the apparatuses.

Further, each of the base station 10 and terminal 20 may include hardware such as a microprocessor, a digital signal processor (DSP), an ASIC (Application Specific Integrated Circuit), a PLD (Programmable Logic Device), a FPGA (Field Programmable Gate Array), etc., and a part or all of each functional block may be realized by the hardware. For example, the processor 1001 may be implemented by at least one of the above hardware elements.

### (Embodiment summary)

As described above, according to an embodiment of the present invention, a network node is provided. The network node includes: a reception unit configured to receive a service request or a PDU (Protocol Data Unit) session establishment request from a terminal; and a control unit configured to perform verification related to a requirement of the terminal to be connected to a network. In a case where the verification by the control unit is successful, the service is provided to the terminal, and, in a case where the verification fails, the service is not provided to the terminal.

According to the above-described configuration, before providing services to the terminal, the network can verify whether the requirement of the terminal to be connected to the network is satisfied. In other words, a terminal is not provided with services before verification by the network.

The requirement may be a requirement related to a geographical location of the terminal. According to the above-described configuration, the network can verify whether the requirement of the terminal to be connected to the network is satisfied before providing services to the terminal.

The control unit may determine that the verification is successful in a case where the geographical location of the terminal corresponds to the network, and may determine that the verification fails in a case where the geographical location of the terminal does not correspond to the network. According to the above-described configuration, the network can verify whether the requirement of the terminal to be connected to the network is satisfied before providing services to the terminal.

The network node further includes a transmission unit, and the transmission unit may transmit an indication for triggering a handover targeting a network corresponding to the geographical location of the terminal to a base station that is connected to the terminal in a case where the verification by the control unit fails. According to the above-described configuration, before providing services to the terminal, the network can trigger a handover in a case where the geographical requirement to be connected to the network is not satisfied.

The network node further includes a transmission unit, and the transmission unit may transmit a deregistration request and information corresponding to the geographical location of the terminal to the terminal in a case where the verification by the terminal fails. According to the above-described configuration, before providing services to the terminal, in a case where the geographical requirement to be connected to the network is not satisfied, the network can deregister the terminal and cause the terminal to be connected to another network.

In addition, according to an embodiment of the present invention, a communication method performed by a network node is provided. The communication method includes: receiving a service request or a PDU (Protocol Data Unit) session establishment request from a terminal; performing verification related to a requirement of the terminal to be connected to a network; and, in a case where the verification is successful, providing the service to the terminal, and, in a case where the verification fails, not providing the service to the terminal.

According to the above-described configuration, before providing services to the terminal, the network can verify whether the requirement of the terminal to be connected to the network is satisfied. In other words, a terminal is not provided with services before verification by the network.

### (Supplement of embodiment)

As described above, one or more embodiments have been described. The present invention is not limited to the above embodiments. A person skilled in the art should understand that there are various modifications, variations, alternatives, replacements, etc., of the embodiments. In order to facilitate understanding of the present invention, specific values have been used in the description. However, unless otherwise specified, those values are merely examples and other appropriate values may be used. The division of the described items may not be essential to the present invention. The things that have been described in two or more items may be used in a combination if necessary, and the thing that has been described in one item may be appropriately applied to another item (as long as there is no contradiction). Boundaries of functional units or processing units in the functional block diagrams do not necessarily correspond to the boundaries of physical parts. Operations of multiple functional units may be physically performed by a single part, or an operation of a single functional unit may be physically performed by multiple parts. The order of sequences and flowcharts described in an embodiment of the present invention may be changed as long as there is no contradiction. For the sake of description convenience, each of the network node 30 and the terminal 20 has been described by using functional block diagrams. However, the apparatuses may be implemented by hardware, software, or a combination of hardware and software. The software executed by a processor included in the network node 30 according to an embodiment of the present invention and the software executed by a processor included in the terminal 20 according to an embodiment of the present invention may be stored in a random access memory (RAM), a flash memory, a read only memory (ROM), an EPROM, an EEPROM, a register, a hard disk (HDD), a removable disk, a CD-ROM, a database, a server, or any other appropriate recording medium.

Further, information indication may be performed not only by methods described in an aspect/embodiment of the present specification but also a method other than those described in an aspect/embodiment of the present specification. For example, the information transmission may be performed by physical layer signaling (e.g., DCI (Downlink Control Information), UCI (Uplink Control Information)), upper layer signaling (e.g., RRC (Radio Resource Control) signaling, MAC (Medium Access Control) signaling, broadcast information (MIB (Master Information Block), SIB (System Information Block))), other signals, or combinations thereof. Further, RRC signaling may be referred to as an RRC message. The RRC signaling may be, for example, an RRC connection setup message, an RRC connection reconfiguration message, or the like.

Each aspect/embodiment described in the present disclosure may be applied to at least one of a system using LTE (Long Term Evolution), LTE-A (LTE-Advanced), SUPER 3G, IMT-Advanced, 4G (4th generation mobile communication system), 5G (5th generation mobile communication system), FRA (Future Radio Access), NR (new Radio), W-CDMA (registered trademark), GSM (registered trademark), CDMA2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), and other appropriate systems, and a next generation system enhanced therefrom. Further, multiple systems may also be applied in combination (e.g., at least one of LTE and LTE-A combined with 5G, etc.).

The order of processing steps, sequences, flowcharts or the like of an aspect/embodiment described in the present specification may be changed as long as there is no contradiction. For example, in a method described in the present specification, elements of various steps are presented in an exemplary order. The order is not limited to the presented specific order.

The particular operations, that are supposed to be performed by the network node 30 in the present specification, may be performed by an upper node in some cases. In a network including one or more network nodes including the network node 30, it is apparent that various operations performed for communicating with the terminal 20 may be performed by at least one of the network node 30 and another network node other than the network node 30 (for example, but not limited to, MME or S-GW). According to the above, a case is described in which there is another single network node other than the network node 30. However, the other network node may be a combination of multiple other network nodes (e.g., MME and S-GW).

The information or signals described in this disclosure may be output from a higher layer (or lower layer) to a lower layer (or higher layer). The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another apparatus.

A decision or a determination in an embodiment of the present invention may be realized by a value (0 or 1) represented by one bit, by a boolean value (true or false), or by comparison of numerical values (e.g., comparison with a predetermined value).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL) and wireless technologies (infrared, microwave, etc.), at least one of these wired line technologies and wireless technologies is included within the definition of the transmission medium.

Information, a signal, or the like, described in the present specification may represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and/or a term required for understanding of the present specification may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

As used in the present disclosure, the terms "system" and "network" are used interchangeably.

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

In the present disclosure, the terms "BS: Base Station", "Radio Base Station", "Base Station Apparatus", "Fixed Station", "NodeB", "eNodeB (eNB)", "gNodeB (gNB)", "Access Point", "Transmission Point", "Reception Point", "Transmission/Reception Point", "Cell", "Sector", "Cell Group", "Carrier", "Component Carrier", and the like, may be used interchangeably. The base station may be referred to as a macro-cell, a small cell, a femtocell, a picocell and the like.

The base station may accommodate (provide) one or more (e.g., three) cells. In the case where the base station accommodates a plurality of cells, the entire coverage area of the base station may be divided into a plurality of smaller areas, each smaller area may provide communication services by means of a base station subsystem (e.g., an indoor small base station or a remote Radio Head (RRH)). The term "cell" or "sector" refers to a part or all of the coverage area of at least one of the base station and base station subsystem that provides communication services at the coverage.

In the present disclosure, terms such as "mobile station (MS)", "user terminal", "user equipment (UE)", "terminal", and the like, may be used interchangeably.

There is a case in which the mobile station may be referred to, by a person skilled in the art, as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other appropriate terms.

At least one of the base station and the mobile station may be referred to as a transmission apparatus, reception apparatus, communication apparatus, or the like. The at least one of the base station and the mobile station may be a device mounted on the mobile station, the mobile station itself, or the like. The mobile station may be a vehicle (e.g., a car, an airplane, etc.), an unmanned mobile body (e.g., a drone, an automated vehicle, etc.), or a robot (manned or unmanned). At least one of the base station and the mobile station may include an apparatus that does not necessarily move during communication operations. For example, at least one of the base station and the mobile station may be an IoT (Internet of Things) device such as a sensor.

Further, the base station in the present disclosure may be read as the user terminal. For example, each aspect/embodiment of the present disclosure may be applied to a configuration in which communications between the base station and the user terminal are replaced by communications between multiple terminals 20 (e.g., may be referred to as D2D (Device-to-Device), V2X (Vehicle-to-Everything), etc.). In this case, a function of the network node 30 described above may be provided by the terminal 20. Further, the phrases "up" and "down" may also be replaced by the phrases corresponding to terminal-to-terminal communication (e.g., "side"). For example, an uplink channel, a downlink channel, or the like, may be read as a sidelink channel.

Further, the user terminal in the present disclosure may be read as the base station. In this case, the function of the user terminal described above may be provided by the base station.

The term "determining" used in the present specification may include various actions or operations. The "determining" may include, for example, a case in which "judging", "calculating", "computing", "processing", "deriving", "investigating", "looking up, search, inquiry" (e.g., looking up a table, database, or other data structures), or "ascertaining" is deemed as "determining". Further, the "determining" may include a case in which "receiving" (e.g., receiving information), "transmitting" (e.g., transmitting information), "inputting", "outputting", or "accessing" (e.g., accessing data in a memory) is deemed as "determining". Further, the "determining" may include a case in which "resolving", "selecting", "choosing", "establishing", "comparing", or the like is deemed as "determining". In other words, the "determining" may include a case in which a certain action or operation is deemed as "determining". Further, "decision" may be read as "assuming", "expecting", or "considering", etc.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, and printed electrical connections and, as a number of nonlimiting and non-inclusive examples, electromagnetic energy having wavelengths in the radio frequency region, the microwave region, and the light (both visible and invisible) region.

The reference signal may be abbreviated as RS or may be referred to as a pilot, depending on the applied standards.

The description "based on" used in the present specification does not mean "based on only" unless otherwise specifically noted. In other words, the phrase "based on" means both "based on only" and "based on at least".

Any reference to an element using terms such as "first" or "second" as used in the present disclosure does not generally limit the amount or the order of those elements. These terms may be used in the present disclosure as a convenient way to distinguish between two or more elements. Therefore, references to the first and second elements do not imply that only two elements may be employed or that the first element must in some way precede the second element.

"Means" included in the configuration of each of the above apparatuses may be replaced by "parts", "circuits", "devices", etc.

In the case where the terms "include", "including" and variations thereof are used in the present disclosure, these terms are intended to be comprehensive in the same way as the term "comprising". Further, the term "or" used in the present specification is not intended to be an "exclusive or".

In the present disclosure, in a case where an article is added by translation, for example "a", "an", and "the", the disclosure may include that the noun following these articles is plural.

In this disclosure, the term "A and B are different" may mean "A and B are different from each other." It should be noted that the term "A and B are different" may mean "A and B are different from C." Terms such as "separated" or "combined" may be interpreted in the same way as the above-described "different".

An aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

As described above, the present invention has been described in detail. It is apparent to a person skilled in the art that the present invention is not limited to one or more embodiments of the present invention described in the present specification. Modifications, alternatives, replacements, etc., of the present invention may be possible without departing from the subject matter and the scope of the present invention defined by the descriptions of claims. Therefore, the descriptions of the present specification are for illustrative purposes only, and are not intended to be limitations to the present invention.

### DESCRIPTION OF THE REFERENCE NUMERALS

10 Base station
110 Transmission unit
120 Reception unit
130 Configuration unit
140 Control unit
20 Terminal
210 Transmission unit
220 Reception unit
230 Configuration unit
240 Control unit
30 Network node
1001 Processor
1002 Storage device
1003 Auxiliary storage device
1004 Communication device
1005 Input device
1006 Output device

## Claims

1. A network node comprising:
a reception unit configured to receive a service request or a PDU (Protocol Data Unit) session establishment request from a terminal; and
a control unit configured to perform verification related to a requirement of the terminal to be connected to a network, wherein
in a case where the verification by the control unit is successful, the service is provided to the terminal, and, in a case where the verification fails, the service is not provided to the terminal.

2. The network node as claimed in claim 1, wherein
the requirement is a requirement related to a geographical location of the terminal.

3. The network node as claimed in claim 2, wherein
the control unit determines that the verification is successful in a case where the geographical location of the terminal corresponds to the network, and determines that the verification fails in a case where the geographical location of the terminal does not correspond to the network.

4. The network node as claimed in claim 3, wherein
the network node further includes a transmission unit, and
the transmission unit transmits an indication for triggering a handover targeting a network corresponding to the geographical location of the terminal to a base station that is connected to the terminal in a case where the verification by the control unit fails.

5. The network node as claimed in claim 3, wherein
the network node further includes a transmission unit, and
the transmission unit transmits a deregistration request and information corresponding to the geographical location of the terminal to the terminal in a case where the verification by the terminal fails.

6. A communication method performed by a network node, the communication method comprising:
receiving a service request or a PDU (Protocol Data Unit) session establishment request from a terminal;
performing verification related to a requirement of the terminal to be connected to a network; and
in a case where the verification is successful, providing the service to the terminal, and, in a case where the verification fails, not providing the service to the terminal.
